# FASCICULE DE BREVET EUROPEEN

(11) **EP 3 835 162 B1**
(45) Date de publication et mention de la délivrance du brevet: **27.05.2026**
(21) Numéro de dépôt: 20209583.2
(22) Date de dépôt: 24.11.2020
(51) Int. Cl.: B60W 50/08, B60W 50/10

(54) **PROCÉDÉ DE GESTION DE CONFIGURATION D'UN VÉHICULE AUTOMOBILE**
VERFAHREN ZUR STEUERUNG DER KONFIGURATION EINES KRAFTFAHRZEUGS
METHOD FOR MANAGING THE CONFIGURATION OF A MOTOR VEHICLE

(30) Priorité: 12.12.2019 FR 1914272
(43) Date de publication de la demande: 16.06.2021
(73) Titulaire: Renault s.a.s, 92100 Boulogne Billancourt (FR)
(72) Inventeur: LUCET, Noemie, 92290 Chatenay-Malabry (FR); MOUTON, Xavier, 78280 Guyancourt (FR)
(74) Mandataire: Renault Group

(56) Documents cités:
- WO-A1-2016/166464
- DE-A1- 102018 218 032
- US-A1- 2019 344 797
- US-A1- 2019 351 912

## Description

### Domaine technique de l'invention

L'invention concerne un procédé de gestion de configuration d'un véhicule automobile. L'invention porte aussi sur un système de gestion de configuration d'un véhicule automobile. L'invention porte encore sur un produit programme d'ordinateur comprenant des instructions de code de programme enregistrées sur un support lisible par une unité de commande électronique pour mettre en œuvre les étapes du procédé de gestion de configuration d'un véhicule automobile. L'invention porte aussi sur un support d'enregistrement de données, lisible par une unité de commande électronique, sur lequel est enregistré un tel produit programme.

### Etat de la technique antérieure

Le comportement d'un véhicule automobile, en particulier grâce aux réglages du châssis et de la vie ou ambiance à bord, est généralement paramétrable par l'utilisateur en sélectionnant un mode de conduite parmi ceux prédéfinis par le constructeur automobile.

En outre, certains véhicules permettent un paramétrage indépendant de plusieurs critères par l'utilisateur, par exemple la puissance moteur et/ou le ressenti à la pédale de frein et/ou la récupération d'énergie au freinage. Un tel paramétrage s'avère fastidieux et complexe à comprendre. Quoi qu'il en soit, la personnalisation est limitée ce qui peut engendrer une déception pour l'utilisateur.

Il est connu de US 2019/344797 A1 un procédé de gestion de configuration d'un véhicule automobile permettant de régler automatiquement au moins un organe du véhicule dans un mode de fonctionnement associé à des valeurs de réglage de paramètres d'au moins deux critères émotionnels, les valeurs de réglage étant saisies par un utilisateur.

### Présentation de l'invention

Le but de l'invention est de fournir un procédé de gestion de configuration d'un véhicule automobile remédiant aux inconvénients ci-dessus et améliorant les procédés de gestion de configuration connus de l'art antérieur. En particulier, l'invention permet de réaliser un véhicule permettant à l'utilisateur de le personnaliser de manière plus intuitive et plus fine, en fonction de son ressenti, afin de s'approcher au plus près de ses attentes.

### Résumé de l'invention

Pour atteindre cet objectif, l'invention porte sur un procédé de gestion de configuration d'un véhicule automobile selon la revendication indépendante 1.

L'étape de saisie de valeurs de réglage de paramètres peut se faire par saisie de trois valeurs de réglage de paramètres de trois critères émotionnels par un utilisateur.

Le procédé peut comprendre une étape de saisie de valeurs de réglage de paramètres de deux critères émotionnels par un utilisateur et, en conséquence de cette saisie, une étape de réglage automatique d'au moins trois organes, ou le procédé peut comprendre une étape de saisie de valeurs de réglage de paramètres de trois critères émotionnels par un utilisateur et, en conséquence de cette saisie, une étape de réglage automatique d'au moins quatre organes.

L'étape de saisie peut comprendre une saisie par l'utilisateur d'une valeur pour chaque critère émotionnel.

L'au moins un organe peut comprendre un moteur d'entraînement du véhicule et/ou un système de freinage et/ou un système de contrôle du comportement du véhicule, notamment de la stabilité du véhicule, et/ou un système de suspension pilotée et/ou un système de direction et/ou un système de massages et/ou un système de climatisation et/ou un système de chauffage et/ou un système de sonorisation, notamment de conception sonore, et/ou un système d'interface homme-machine et/ou un système de réglage de l'espace de conduite et/ou un système de création d'ambiance olfactive et/ou un système de création d'ambiance lumineuse. L'invention porte encore sur un système de gestion de configuration d'un véhicule automobile selon la revendication indépendante 6.

L'invention porte encore sur un produit programme d'ordinateur selon la revendication indépendante 7.

L'invention porte encore sur un support d'enregistrement de données selon la revendication indépendante 8.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un mode de réalisation d'un véhicule automobile.
La figure 2 est un schéma bloc des étapes d'un procédé selon un mode d'exécution.
La figure 3 est un graphique à deux axes représentant deux critères émotionnels selon un mode de réalisation préféré du véhicule automobile.
La figure 4 est une représentation schématique d'un critère émotionnel selon le mode de réalisation préféré du véhicule automobile.
La figure 5 est un graphique à trois axes représentant chacun un critère émotionnel selon le mode de réalisation préféré du véhicule automobile.
La figure 6 est un graphique à trois axes représentant chacun un critère émotionnel illustrant une représentation d'un organe de type système de massage comprenant plusieurs modes de massage et fonctionnant selon un mode d'exécution du procédé de l'invention, les transitions entre les modes de massage étant discrètes.
La figure 7 est un graphique à trois axes représentant chacun un critère émotionnel illustrant une représentation d'un organe de type système de réglage de l'espace de conduite comprenant plusieurs positions de réglage et fonctionnant selon un mode d'exécution du procédé de l'invention, les transitions entre les positions de réglage étant discrètes.
La figure 8 est un graphique à trois axes représentant chacun un critère émotionnel illustrant une représentation d'un organe de type système de sonorisation comprenant plusieurs modes de sonorisation et fonctionnant selon un mode d'exécution du procédé de l'invention, les transitions entre les modes de sonorisation étant discrètes.
La figure 9 est un graphique à trois axes représentant chacun un critère émotionnel illustrant une gestion de l'intensité sensorielle d'un organe de type système de suspension selon un mode d'exécution du procédé de l'invention.
La figure 10 est un graphique à trois axes représentant chacun un critère émotionnel illustrant une gestion binaire d'un organe de type système de recyclage de l'air de l'habitacle du véhicule selon un mode d'exécution du procédé de l'invention.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

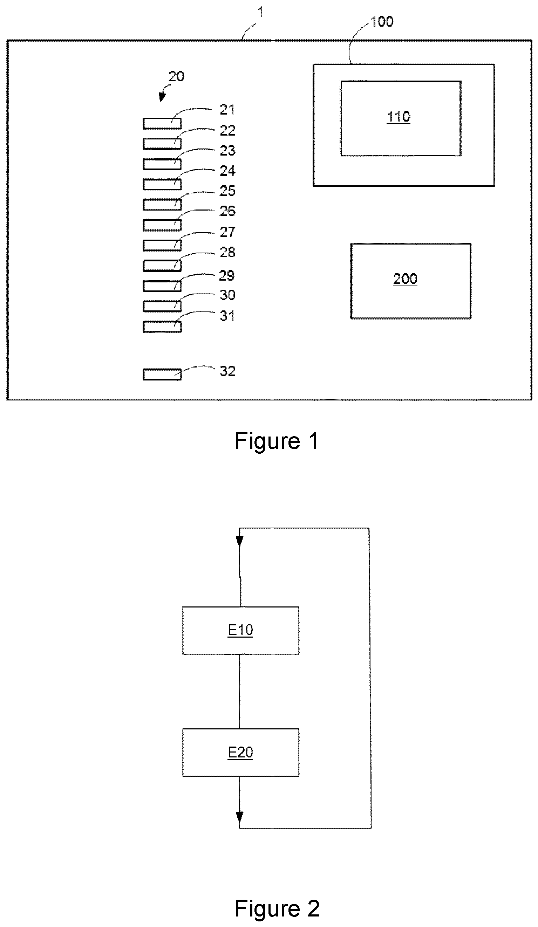

La figure 1 illustre schématiquement un mode de réalisation d'un véhicule 1, en particulier un véhicule automobile. Le véhicule 1 peut être par exemple un véhicule particulier ou un véhicule utilitaire, un camion ou un bus.

Le véhicule 1 comprend un système 100 de gestion de configuration ou de fonctionnement du véhicule. Le système 100 comprend de préférence des éléments 110 matériels et/ou logiciels aptes à mettre en œuvre, ou conçus pour mettre en œuvre, un procédé de gestion de fonctionnement du véhicule qui sera décrit par la suite.

Ainsi, le véhicule automobile 1 comprend des éléments 110 matériels et/ou logiciels aptes à mettre en œuvre, ou conçus pour mettre en œuvre, le procédé de gestion de fonctionnement du véhicule qui sera décrit par la suite.

Le véhicule comprend encore un produit programme d'ordinateur comprenant des instructions de code de programme enregistrées sur un support lisible par une unité de commande électronique 200 pour mettre en œuvre les étapes du procédé de gestion sera décrit par la suite lorsque le programme fonctionne sur l'unité de commande électronique 200.

Le véhicule comprend encore un support d'enregistrement de données, lisible par l'unité de commande électronique 200 sur lequel est enregistré un programme d'ordinateur comprenant des instructions de code de programme de mise en œuvre du procédé. Le procédé de gestion sera décrit par la suite.

Le véhicule 1 comprend au moins un organe 20. De préférence, un organe 20 peut être :
- un moteur d'entraînement 21 du véhicule, et/ou
- un système de freinage 22, et/ou
- un système de contrôle du comportement de la voiture (y compris de stabilité) 23, et/ou
- un système de suspension pilotée 24, et/ou
- un système de direction 25, et/ou
- un système de massages 26, de préférence agencé au niveau du siège du conducteur, et/ou
- un système de climatisation 27, et/ou
- un système de chauffage 28, et/ou
- un système de sonorisation (y compris de conception sonore) 29, et/ou
- un système d'interface homme-machine 30, de préférence agencé au niveau de l'espace accessible, ou au minimum visible, depuis le poste ou siège du conducteur, et/ou
- un système de réglage de l'espace de conduite 31, à savoir réglage du siège et/ou du ou des rétroviseur(s) et/ou de la colonne de direction, et/ou
- un système de création d'ambiance olfactive, et/ou
- un système de création d'ambiance lumineuse 32 (écrans, projecteurs, rétroéclairages, éléments supplémentaires de conception d'ambiance lumineuse).

Un mode d'exécution d'un procédé de gestion de configuration du véhicule est décrit ci-après en référence à la figure 2.

A noter que le procédé de gestion de configuration est destiné à un véhicule à conduite manuelle ou à un véhicule dit autonome. Un véhicule autonome est apte à aller d'un lieu où il se trouve à un lieu d'arrivée de manière autonome, par exemple grâce à la simple sélection d'un lieu d'arrivée par un passager. Le procédé de gestion de configuration est destiné également à un véhicule présentant un système d'aide à la conduite permettant une délégation de conduite partielle, soit une solution intermédiaire entre la conduite manuelle et la conduite dite autonome.

Comme illustré en particulier sur la figure 2, le procédé de gestion de configuration du véhicule automobile comprend une étape de saisie E10 d'au moins une valeur de réglage d'un paramètre d'au moins un critère émotionnel 10. Cette saisie est effectuée par un utilisateur.

Cet utilisateur est de préférence le conducteur du véhicule mais peut aussi être un passager du véhicule, en particulier un passager avant situé à proximité du conducteur et/ou un passager situé à proximité d'une zone d'un tableau de bord dédiée à l'information concernant le véhicule. Cet utilisateur peut enfin être une personne restant en dehors du véhicule. Dans ce cas, cet utilisateur procède à l'étape de saisie E10 permettant de gérer la configuration ultérieure du véhicule utilisé par l'utilisateur ou au moins un autre utilisateur.

En conséquence de cette étape de saisie E10 d'au moins une valeur de réglage d'un paramètre d'un critère émotionnel 10, une étape de réglage automatique E20 de l'organe 20 du véhicule dans un mode de fonctionnement associé à la valeur de réglage du paramètre du critère émotionnel 10 est lancée.

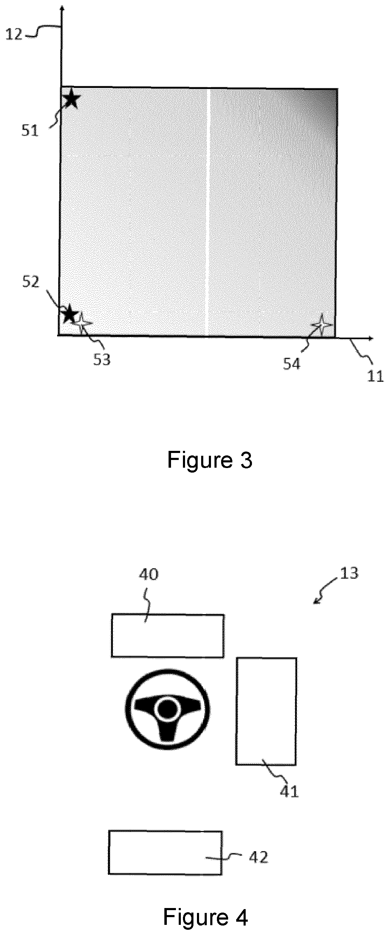

Un premier critère émotionnel est un critère de dynamisme 11 du véhicule représenté selon l'axe des abscisses du graphique de la figure 3. De préférence, un niveau faible 53 voire nul de ce critère de dynamisme 11 ou d'énergie correspond à une sensation relaxante. A l'inverse, de préférence, un niveau fort 54 voire maximal de ce critère de dynamisme 11 ou d'énergie correspond à une sensation stimulante. Ainsi, le critère de dynamisme 11 peut être vu comme un niveau d'énergie ou de tonicité.

Le critère de dynamisme impacte le comportement dynamique du véhicule et en particulier du châssis (pilotage des amortisseurs, ressenti de la pédale d'accélérateur, puissance du moteur d'entraînement, système de freinage, stabilité du véhicule, système de direction). Il impacte également des équipements jouant un rôle dans le ressenti dynamique comme les sièges (massages), un dispositif de sonorisation (ambiance calme/dynamique), un dispositif de création d'ambiance olfactive et lumineuse.

Un deuxième critère émotionnel est un critère de contrôle ou maîtrise symbolique ou niveau de délégation de conduite 12 du véhicule représenté selon l'axe des ordonnées du graphique de la figure 3. De préférence, un niveau faible 52, voire nul, de ce critère de contrôle 12 correspond à une délégation au moins partielle de l'utilisateur au véhicule, par exemple en termes de freinages liés à la détection de situations nécessitant le ralentissement, voire l'arrêt, du véhicule, en particulier en cas de véhicule équipé d'un dispositif ADAS pour le terme anglo-saxon « advanced driver assistance system ». A l'inverse, de préférence, un niveau fort 51, voire maximal, de ce critère de contrôle 12 correspond à la maîtrise complète du véhicule (par exemple comme si le véhicule n'était pas équipé d'un ADAS). Avantageusement, comme il sera vu plus loin, une modification ou évolution de l'espace de conduite peut être prévue pour compléter ce critère émotionnel de contrôle ou niveau de délégation de conduite 12.

Autrement dit le niveau de délégation de conduite représente le niveau d'implication de conduite dans le véhicule. Dans le cas de véhicule équipé d'un dispositif ADAS ou d'un mode de véhicule autonome, il y a délégation de certaines tâches au véhicule.

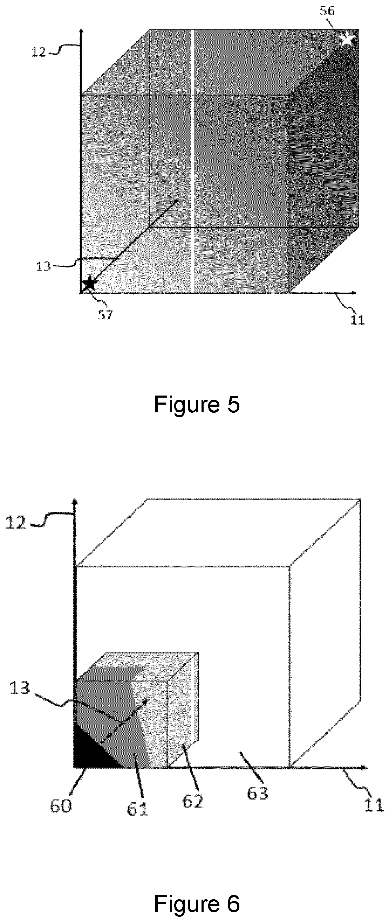

Un troisième critère émotionnel est un critère de distribution d'informations 13 dans le véhicule, comme illustré sur la figure 4. Ce critère de distribution d'informations 13 au sein de l'habitacle est par exemple représenté selon un axe perpendiculaire à l'axe du critère émotionnel de dynamisme 11 et perpendiculaire à l'axe du critère émotionnel de contrôle 12 évoqués précédemment, comme illustré sur la figure 5. De préférence, un niveau faible, voire nul, de ce critère de distribution d'informations 13 correspond à des informations s'étendant jusqu'aux places arrières du véhicule. Un niveau intermédiaire de ce critère de distribution d'informations 13 correspond par exemple à des informations diffusées devant le conducteur et sur au moins un côté du conducteur (partie droite/centrale de la figure 4). De préférence, un niveau fort, voire maximal, de ce critère de distribution d'informations 13 dans l'habitacle correspond à des informations diffusées devant le conducteur ou sensiblement devant le conducteur uniquement ou encore orientées vers le conducteur. La distribution d'information s'entend comme un niveau de concentration d'information vis-à-vis du conducteur. Ainsi, un critère de distribution d'information 13 fort correspond à un ou des stimuli sensoriel(s) et informations fournies par la voiture à destination du conducteur. La figure 4 illustre une distribution d'informations 13 s'étendant derrière le conducteur (référence 42), devant le conducteur (référence 40) et sur le côté droit du conducteur (référence 41).

Le niveau de distribution d'informations correspond par exemple à la localisation de l'information dans le véhicule c'est-à-dire une diffusion au conducteur ou jusqu'à tout le véhicule (passagers en particulier). Les informations sont par exemple visuelles sur des écrans et/ou des projections sur une ou plusieurs vitres et/ou une spatialisation du son et/ou une ambiance lumineuse (guide de lumière par exemple) et/ou une diffusion d'odeurs et/ou de vibrations. Par exemple, un niveau de distribution faible engendre peu de retour d'informations pour le conducteur.

De préférence, l'étape de saisie E10 comprend une saisie par l'utilisateur d'une valeur de réglage d'au moins un paramètre pour l'un des trois critères émotionnels 11, 12, 13. Alternativement, l'étape de saisie E10 comprend une saisie par l'utilisateur de valeurs de réglage de paramètres pour deux des trois critères émotionnels. Alternativement encore, l'étape de saisie E10 comprend une saisie par l'utilisateur de valeurs de réglage de paramètres pour les trois critères émotionnels.

De préférence, pour chaque critère émotionnel 11, 12, 13, la valeur de réglage du paramètre peut prendre plusieurs valeurs discrètes entre une valeur minimale et une valeur maximale. Par exemple, les critères peuvent être définis par des valeurs entières entre 0 et 10. Alternativement, les critères peuvent être définis en sélectionnant une valeur dans un continuum s'étendant entre une valeur minimale et une valeur maximale, par exemple par déplacement d'un curseur sur une échelle entre une valeur minimale et une valeur maximale.

Ainsi, le paramétrage s'établit alors de manière continue ou avec un nombre relativement important de valeurs sélectionnables, de préférence sur les trois axes évoqués précédemment. Comme évoqué précédemment, l'axe des abscisses représente le critère émotionnel de dynamisme 11 ou niveau d'énergie, par exemple de relaxant à stimulant. L'axe des ordonnées représente le critère émotionnel de niveau de délégation de conduite ou contrôle 12 ou niveau de maîtrise symbolique du véhicule. Le troisième axe, par exemple s'étendant virtuellement longitudinalement ou sensiblement longitudinalement, représente le critère émotionnel de distribution d'informations 13 ou niveau d'information.

Ainsi, pour la configuration du véhicule, par exemple celle du châssis et/ou de la vie à bord, le véhicule comprend de préférence le système d'interface homme-machine 30. Le système d'interface homme-machine 30 comprend par exemple un moyen tactile et/ou un moyen comprenant une commande physique de type manette de commande, éventuellement rotative.

Alternativement ou en complément, lorsque les trois axes des critères émotionnels cohabitent, par exemple trois curseurs sont aptes à être déplacés, chacun selon un des trois axes. Alternativement ou en complément, une représentation en trois dimensions est prévue, par exemple un cube dont trois arêtes perpendiculaires les unes par rapport aux autres illustrent les trois critères émotionnels selon les trois axes (comme illustré sur la figure 5). Une telle représentation en trois dimensions est de préférence manipulable virtuellement. Par exemple, une représentation en trois dimensions comprend une ou plusieurs faces ou surfaces ou zones tactiles de sorte qu'il est possible d'agir dessus par simple toucher.

Avantageusement, un faible niveau 57 sur les trois critères émotionnels 11, 12, 13 correspond à un ressenti « confort » au sein du véhicule. Un fort niveau 56 sur les trois critères émotionnels 11, 12, 13 correspond à un ressenti « sport » au sein du véhicule.

Alternativement ou en complément, deux graphiques à deux dimensions chacun sont agencés. Les deux graphiques ont alors de préférence un axe de critère émotionnel en commun. Dans ce cas, la manipulation sur un graphique du critère émotionnel représenté sur l'axe en commun engendre de préférence automatiquement une mise à jour du niveau de ce critère émotionnel sur l'autre graphique en reprenant la valeur sélectionnée ou estimée sur l'axe commun.

A noter qu'en cas de véhicule non équipé par un ADAS, l'axe du critère émotionnel de niveau de délégation de conduite 12 n'a pas ou peu d'intérêt. Dans un tel cas, un simple graphique à deux axes peut être suffisant pour illustrer et/ou sélectionner les critères émotionnels de dynamisme 11 et de niveau d'information 13. De la même manière, en cas de véhicule non équipé de bandeau lumineux, d'écran digital, ou autres éléments permettant de diffuser des informations, l'axe du critère émotionnel 13 de distribution d'informations n'a pas ou peu d'intérêt. Dans un tel cas, un simple graphique à deux axes peut être suffisant pour illustrer et/ou sélectionner les critères émotionnels de dynamisme 11 et de niveau de délégation de conduite 12.

Par exemple, le véhicule comprend une cartographie prédéfinie du mode de fonctionnement du ou des organes 20 en fonction des critères émotionnels. Par exemple, le véhicule comprend des cartographies propres aux différents organes. Elles définissent les fonctionnements et/ou comportements des organes en fonction des critères émotionnels.

Dans l'étape E20, on lit les valeurs de réglages des paramètres des critères émotionnels. Simultanément ou sensiblement simultanément ou par la suite, on reporte les valeurs sur la ou les cartographies dédiée(s). Simultanément ou sensiblement simultanément ou par la suite, on en déduit automatiquement les réglages du ou des organes concernés.

Par exemple, l'organe 20 ou « contributeur » de type système de massage 26 agit au niveau du siège du conducteur.

Le type de massage pour les niveaux faibles voire nuls des trois critères émotionnels est préalablement défini, par exemple le mode « Relax » 60. A partir de ce mode on applique une évolution des massages comme illustré sur la figure 6 entre les quatre modes distincts à savoir « Relax » 60 (massage relaxant - en opposition à tonique - c'est-à-dire plus lent avec des mouvements plus amples), « Lombaires » 61 (massage au niveau des lombaires du conducteur), « Tonique » 62 (massage tonique sur toute la surface du siège soit le dos du conducteur) et « arrêt » 63.

Selon le mode de réalisation représenté figure 6, on applique une évolution des massages de manière discrète, par changements pas à pas, entre les quatre modes distincts à savoir « Relax » 60, « Lombaires » 61, « Tonique » 62 et « arrêt » 63.

Selon un autre mode de réalisation non représenté, on applique une évolution des massages de manière continue, entre les quatre modes distincts à savoir « Relax » 60, « Lombaires » 61, « Tonique » 62 et « arrêt » 63. A chaque phase de transition d'un mode de massage à l'autre, cette transition est réalisée en douceur, de manière continue :
- de Relax 60 à Lombaires 61: peu à peu le massage se dirige davantage vers les lombaires et l'intensité des mouvements sur les autres zones du corps diminue jusqu'à disparaître complètement, laissant la place à la priorité des massages lombaires ;
- de Lombaires 61 à Tonique 62 : peu à peu l'intensité du massage sur la zone lombaire diminue et les mouvements s'étendent aux zones de massage dédiées au typage Tonique ;
- de Tonique 62 ou Lombaires 61 à arrêt 63: peu à peu l'intensité du massage diminue jusqu'à disparaître complètement.

Par exemple, l'organe 20 de type système de réglage de l'espace de conduite 31, à savoir réglage du siège et des rétroviseur(s) et de la colonne de direction agit pour régler l'espace de conduite.

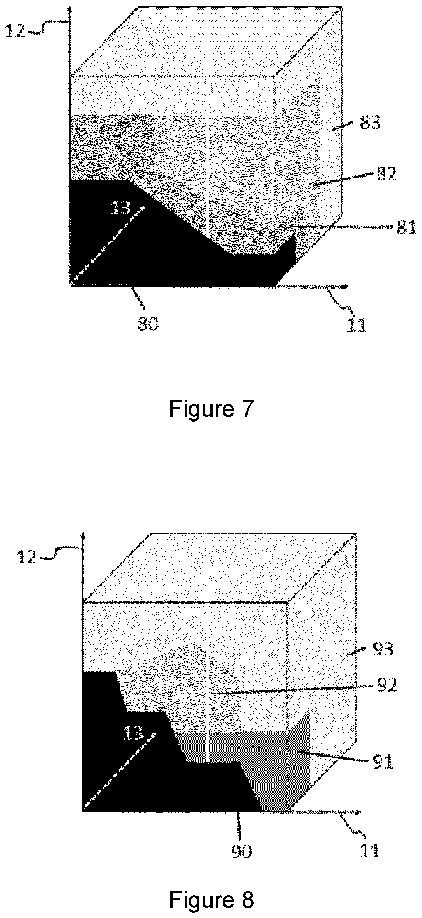

La position de l'espace de conduite (siège, rétroviseur, colonne de direction) pour les niveaux faibles voire nuls des trois critères émotionnels est préalablement définie. On applique soit une évolution de distribution des positions de l'espace de conduite 80, 81, 82, 83 dans tout l'espace défini par les axes des critères émotionnels, de manière discrète par changements de position/valeurs pas-à-pas illustrée sur la figure 7, soit de manière continue (non représenté).

Ainsi, par exemple, lorsqu'on se positionne sur la référence haute, ou niveau fort voire maximal, pour chaque axe de critère émotionnel, la position de l'espace de conduite 83 est telle que le conducteur est dirigé face à la route, de préférence en position haute pour pouvoir parfaitement contrôler son environnement. Eventuellement, le siège conducteur est alors raffermi, devenant plus tonique. Au contraire, lorsqu'on se positionne sur la référence basse, ou niveau faible voire nul, pour chaque axe de critère émotionnel, la position de l'espace de conduite 80 est telle que le siège du conducteur est par exemple tourné légèrement vers l'intérieur, par exemple vers le plan médian vertical et longitudinal de l'habitacle, de sorte à encourager le partage avec les passagers ou toute autre activité. Dans ce cas, la conduite est par exemple partiellement déléguée. Eventuellement, le siège conducteur est alors plus moelleux, moins ferme.

Par exemple, l'organe 20 de type système de sonorisation 29 agit sur l'amélioration du son du moteur d'entraînement 21 du véhicule, par exemple par ajout sonore.

L'amélioration pour les niveaux faibles voire nuls des trois critères émotionnels est préalablement définie. On applique par exemple une évolution de distribution d'amélioration du son 90, 91, 92, 93 dans tout l'espace défini par les trois axes des critères émotionnels de manière discrète, comme représenté sur la figure 8, ou bien de manière continue (non représenté). La contribution de l'amélioration du son du moteur se retrouve alors davantage répartie que dans l'état de la technique.

Par exemple, lorsqu'on se positionne sur la référence haute, ou niveau fort voire maximal, pour chaque axe de critère émotionnel, l'amélioration du son 93 est activée avec un son typé « Sport ». En effet, un tel son évoque généralement le contrôle de la voiture et le dynamisme. En outre, le son est par exemple dirigé uniquement vers le conducteur.

Par exemple, l'organe 20 de type système de suspension agit sur les amortisseurs du véhicule.

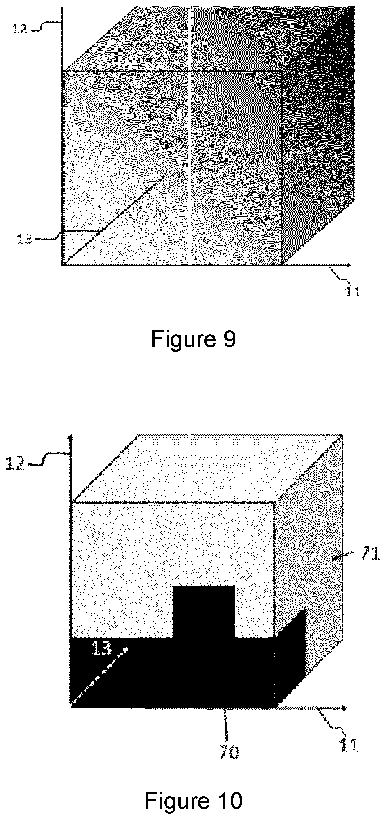

Une configuration des amortisseurs ou du système de suspension pour les niveaux faibles voire nuls des trois critères émotionnels, par exemple une forte absorption, est préalablement définie. De préférence, et tel que représenté sur la figure 9, on gère alors l'intensité sensorielle des amortisseurs dans tout l'espace défini par les axes des critères émotionnels, de manière continue tel que représenté par le dégradé de gris, progressive, jusqu'à une faible absorption des amortisseurs pour les niveaux forts voire maximums des critères émotionnels. En effet, les amortisseurs sont généralement plus rigides en mode nommé habituellement « Sport » (gris foncé voire noir) et plus souples en mode nommé habituellement « Confort » (gris clair voire blanc). Un mode de réalisation avec une évolution discrète de l'intensité sensorielle des amortisseurs est également possible.

Ainsi, à la position de référence haute ou niveaux forts, le conducteur et éventuellement les passagers ressentent parfaitement la route, les secousses correspondant bien à un ressenti tonique / dynamique, et le conducteur est davantage engagé en tant que maître de son véhicule et sa conduite associée. Tandis qu'en position de référence basse ou niveaux faibles, le conducteur et éventuellement les passagers ressentent beaucoup moins la route (effet de flottement de type tapis volant), la conduite étant plus calme et invitant à la délégation de sorte à pouvoir réaliser d'autres tâches en parallèle de la conduite.

A l'instar du son, les autres modalités sensorielles telles que par exemple :
- les modalités visuelles comme par exemple l'intérieur du ou des écrans et/ou du ou des fonds d'écran et/ou le ou les liserés lumineux agencés au sein de l'habitacle en particulier,
- les modalités olfactives en cas de dispositif proposant la diffusion de parfum,
- les modalités tactiles en cas de dispositif proposant des retours haptiques différents, par exemple lors de la manipulation du ou des écrans, en particulier l'écran central, et d'une ou plusieurs commandes physiques,
peuvent évoluer de manière continue ou discrètes.

Plus précisément, par exemple le graphisme des intérieurs d'écran comprend l'intégration du morphisme d'au moins un bouton et/ou d'au moins une animation, etc... Par exemple, les informations des écrans sont plus ou moins dirigées vers le conducteur ou, au contraire, partagées avec les passagers. Par exemple, la lumière intérieure est activée et/ou orientée vers le conducteur puis s'étend dans tout l'habitacle avec un rythme plus ou moins rapide pour les animations, notamment des animations via des guides lumineux.

Certains types d'organe ou contributeurs, comme le recyclage de l'air intérieur de l'habitacle par exemple, ne peuvent pas varier de manière continue. Ainsi, comme illustré dans ce cas sur la figure 10, seul le mode de réalisation d'évolution discrète demeure avec seulement une configuration active 70 et une configuration inactive 71, sans évolution continue entre ces deux configurations.

Des variantes de modes de réalisation avec d'autres critères émotionnels peuvent être envisagées tout en reposant de préférence sur le même nombre d'axes de personnalisation, à savoir trois.

En résumé, la solution permet la configuration simultanée d'une multitude d'organes du véhicule, comme illustré sur les figures 6 à 9, via la saisie d'une valeur de réglage par sélection d'un seul triplet ou d'un seul duo de critères émotionnels.

Ainsi, tout comme sur le modèle du réglage de l'intensité sonore, ou du réglage de l'intensité lumineuse, cette approche permet un centrage, non pas sur le type de comportement attendu du véhicule pour lesquels des noms spécifiques sont attribués (par exemple sportif, confortable, écologique) mais sur le type de sensations vécues et/ou recherchées par l'utilisateur en temps réel, autrement dit dans l'instant. Par exemple, on ne règle pas le volume sonore sur un chiffre mais par rapport à la perception de l'intensité qu'on en a.

Au-delà des sensations éprouvées ou ressenties lors de la conduite, cette approche permet de se centrer sur le monde du vivant et l'engagement des sens.

Ainsi, des liens, entre le positionnement ou choix de l'utilisateur sur un ou plusieurs axe(s) continu(s) faisant appel à son ressenti, et tous les contributeurs émotionnels présents dans le véhicule automobile tels que moteur(s), transmission 4x4, amortisseurs, direction du volant, directions avant et arrière, freinage, récupération au freinage, son du moteur, sièges massant, ambiance lumineuse, ambiance sonore, configuration de l'espace de conduite (siège, rétroviseur, colonne de direction), ADAS, affichage des informations (mise en scène de manière générale : localisation et graphisme, congruence sensorielle), recyclage de l'air intérieur, air conditionné, deviennent tangibles.

Au final, l'expérience de l'utilisateur qui peut activer ou mettre en scène tous les contributeurs simultanément éventuellement, est vécue comme étant une expérience continue, personnalisable de manière précise selon son ressenti.

Ainsi, l'utilisateur n'est pas déçu en comparant son expérience vécue au nom ou libellé du « mode » dans lequel il se trouve, les différents modes étant très nombreux et dépourvus de nom. Ainsi, quelle que soit la culture et/ou les attentes de l'utilisateur, aucune déception ne peut être ressentie. En effet, la solution offre une interface et des paramétrages du véhicule engendrant une perception d'expériences illimitées et personnalisables.

## Revendications

1. Procédé de gestion de configuration d'un véhicule automobile (1), **caractérisé en ce qu'**il comprend :
- une étape de saisie (E10) de valeurs de réglage de paramètres d'au moins deux critères émotionnels (10) parmi un critère de dynamisme (11) du véhicule et/ou un critère de niveau de délégation de conduite (12) du véhicule et/ou un critère de distribution d'informations (13) dans le véhicule par un utilisateur et, en conséquence de cette saisie,
- une étape de réglage automatique (E20) de plusieurs organes (20) du véhicule dans un mode de fonctionnement associé aux valeurs de réglage.

2. Procédé de gestion de configuration selon l'une des revendications précédentes, **caractérisé en ce que** l'étape de saisie (E10) de valeurs de réglage de paramètres se fait par saisie de trois valeurs de réglage de paramètres de trois critères émotionnels (10) par un utilisateur.

3. Procédé de gestion de configuration selon l'une des revendications précédentes, **caractérisé en ce qu'**il comprend une étape de saisie (E10) de valeurs de réglage de paramètres de deux critères émotionnels (10) par un utilisateur et, en conséquence de cette saisie, une étape de réglage automatique (E20) d'au moins trois organes (20), ou **en ce qu'**il comprend une étape de saisie (E10) de valeurs de réglage de paramètres de trois critères émotionnels (10) par un utilisateur et, en conséquence de cette saisie, une étape de réglage automatique (E20) d'au moins quatre organes (20).

4. Procédé de gestion de configuration selon l'une des revendications précédentes, **caractérisé en ce que** l'étape de saisie (E10) comprend une saisie par l'utilisateur d'une valeur pour chaque critère émotionnel.

5. Procédé de gestion de configuration selon l'une des revendications précédentes, **caractérisé en ce que** l'au moins un organe (20) comprend un moteur d'entraînement (21) du véhicule et/ou un système de freinage (22) et/ou un système de contrôle du comportement du véhicule (23), notamment de la stabilité du véhicule, et/ou un système de suspension pilotée (24) et/ou un système de direction (25) et/ou un système de massages (26) et/ou un système de climatisation (27) et/ou un système de chauffage (28) et/ou un système de sonorisation (29), notamment de conception sonore, et/ou un système d'interface homme-machine (30) et/ou un système de réglage de l'espace de conduite (31) et/ou un système de création d'ambiance olfactive et/ou un système de création d'ambiance lumineuse (32).

6. Système (100) de gestion de configuration d'un véhicule automobile (1), le système comprenant des éléments (110) matériels et/ou logiciels mettant en œuvre le procédé selon l'une des revendications 1 à 6.

7. Produit programme d'ordinateur comprenant des instructions de code de programme enregistrées sur un support lisible par une unité de commande électronique (200) pour mettre en oeuvre les étapes du procédé de gestion selon l'une quelconque des revendications 1 à 6 lorsque ledit programme fonctionne sur une unité de commande électronique (200).

8. Support d'enregistrement de données, lisible par une unité de commande électronique (200), sur lequel est enregistré un produit programme d'ordinateur selon la revendication 7.

## Patentansprüche

1. Verfahren zur Verwaltung einer Konfiguration eines Kraftfahrzeugs (1), **dadurch gekennzeichnet, dass** es Folgendes umfasst:
- einen Schritt des Eingebens (E10) von Parametereinstellwerten für mindestens zwei emotionale Kriterien (10) unter einem Kriterium der Dynamik (11) des Fahrzeugs und/oder einem Kriterium des Grads der Delegierung (12) des Führens des Fahrzeugs und/oder einem Kriterium der Ausgabe von Informationen (13) in dem Fahrzeug durch einen Benutzer und, infolge dieser Eingabe,
- einen Schritt des automatischen Einstellens (E20) von mehreren Organen (20) des Fahrzeugs in einer Betriebsart, die den Einstellwerten zugeordnet ist.

2. Verfahren zur Verwaltung einer Konfiguration nach einem der vorhergehenden Ansprüche, **dadurch gekennzeichnet, dass** der Schritt des Eingebens (E10) von Parametereinstellwerten durch Eingeben von drei Parametereinstellwerten für drei emotionale Kriterien (10) durch einen Benutzer durchgeführt wird.

3. Verfahren zur Verwaltung einer Konfiguration nach einem der vorhergehenden Ansprüche, **dadurch gekennzeichnet, dass** es einen Schritt des Eingebens (E10) von Parametereinstellwerten für zwei emotionale Kriterien (10) durch einen Benutzer und, infolge dieser Eingabe, einen Schritt des automatischen Einstellens (E20) von mindestens drei Organen (20) umfasst, oder dadurch, dass es einen Schritt des Eingebens (E10) von Parametereinstellwerten für drei emotionale Kriterien (10) durch einen Benutzer und, infolge dieser Eingabe, einen Schritt des automatischen Einstellens (E20) von mindestens vier Organen (20) umfasst.

4. Verfahren zur Verwaltung einer Konfiguration nach einem der vorhergehenden Ansprüche, **dadurch gekennzeichnet, dass** der Schritt des Eingebens (E10) ein Eingeben eines Werts für jedes emotionale Kriterium durch den Benutzer umfasst.

5. Verfahren zur Verwaltung einer Konfiguration nach einem der vorhergehenden Ansprüche, **dadurch gekennzeichnet, dass** das mindestens eine Organ (20) einen Antriebsmotor (21) des Fahrzeugs und/oder ein Bremssystem (22) und/oder ein System (23) zur Steuerung des Verhaltens des Fahrzeugs, insbesondere der Stabilität des Fahrzeugs, und/oder ein System (24) zur gesteuerten Federung und/oder ein Lenksystem (25) und/oder ein Massagesystem (26) und/oder ein Klimatisierungssystem (27) und/oder ein Heizsystem (28) und/oder ein Soundsystem (29), insbesondere ein Sounddesignsystem, und/oder ein Mensch-Maschine-Schnittstellensystem (30) und/oder ein System (31) zum Einstellen des Fahrraums und/oder ein System (32) zur Erzeugung eines olfaktorischen Ambientes und/oder ein System zur Erzeugung eines Lichtambientes umfasst.

6. System (100) zur Verwaltung der Konfiguration eines Kraftfahrzeugs (1), wobei das System Hardware- und/oder Softwareelemente (110) umfasst, die das Verfahren nach einem der Ansprüche 1 bis 6 durchführen.

7. Computerprogrammprodukt, das Programmcodeanweisungen umfasst, die auf einem von einer elektronischen Steuereinheit (200) lesbaren Medium gespeichert sind, um die Schritte des Verfahrens zur Verwaltung der Konfiguration nach einem der Ansprüche 1 bis 6 durchzuführen, wenn das Programm auf einer elektronischen Steuereinheit (200) läuft.

8. Datenspeichermedium, das von einer elektronischen Steuereinheit (200) gelesen werden kann und auf dem ein Computerprogrammprodukt nach Anspruch 7 gespeichert ist.

## Claims

1. Method for managing the configuration of a motor vehicle (1), **characterized in that** it comprises:
- a step of a user entering (E10) values for adjusting parameters of at least two emotional criteria (10) from among a criterion of the dynamism (11) of the vehicle and/or a criterion of the level of delegation of the driving (12) of the vehicle and/or a criterion of the distribution of information (13) in the vehicle and, as a consequence of this entry,
- a step of automatically adjusting (E20) several members (20) of the vehicle in an operating mode associated with the adjustment values.

2. Configuration management method according to one of the preceding claims, **characterized in that** the step of entering (E10) parameter adjustment values takes place by a user entering three values for adjusting parameters of three emotional criteria (10).

3. Configuration management method according to one of the preceding claims, **characterized in that** it comprises a step of a user entering (E10) values for adjusting parameters of two emotional criteria (10) and, as a consequence of this entry, a step of automatically adjusting (E20) at least three members (20), or **in that** it comprises a step of a user entering (E10) values for adjusting parameters of three emotional criteria (10) and, as a consequence of this entry, a step of automatically adjusting (E20) at least four members (20).

4. Configuration management method according to one of the preceding claims, **characterized in that** the entry step (E10) comprises the user entering a value for each emotional criterion.

5. Configuration management method according to one of the preceding claims, **characterized in that** the at least one member (20) comprises a drive engine (21) of the vehicle and/or a braking system (22) and/or a system for controlling the behaviour of the vehicle (23), notably the stability of the vehicle, and/or a controlled suspension system (24) and/or a steering system (25) and/or a massage system (26) and/or an air conditioning system (27) and/or a heating system (28) and/or a sound system (29), notably a sound design system, and/or a human-machine interface system (30) and/or a system for adjusting the driving space (31) and/or an olfactory ambience creation system and/or a light ambience creation system (32).

6. System (100) for managing the configuration of a motor vehicle (1), the system comprising hardware and/or software elements (110) implementing the method according to one of Claims 1 to 6.

7. Computer program product comprising program code instructions stored on a medium which can be read by an electronic control unit (200) in order to implement the steps of the management method according to any one of Claims 1 to 6 when said program operates on an electronic control unit (200).

8. Data storage medium, which can be read by an electronic control unit (200), on which a computer program product according to Claim 7 is stored.
